# FASCICULE DE BREVET EUROPEEN

(11) **EP 2 100 952 B1**
(45) Date de publication et mention de la délivrance du brevet: **26.01.2011**
(21) Numéro de dépôt: 09305222.3
(22) Date de dépôt: 11.03.2009
(51) Int. Cl.: C12G 1/08, F25D 13/06

(54) **Procédé et machine de refroidissement du col de bouteilles**
Verfahren und Maschine zum Abkühlen von Flaschenhälsen
Method and machine for cooling the neck of bottles

(30) Priorité: 11.03.2008 FR 0851563; 10.03.2009 FR 0951499
(43) Date de publication de la demande: 16.09.2009
(73) Titulaire: Etudes et Creation E.C.B. (Société à responsabilité limitée), 51200 Epernay (FR); C.P.A. (Société à responsabilité limitée), 51530 Mardeuil (FR); Partiot, Jean-Baptiste, 51160 AY (FR)
(72) Inventeur: Ballu, M. Jean-Louis, F-51200, EPERNAY (FR)
(74) Mandataire: Rhein, Alain

(56) Documents cités:
- FR-A- 543 265
- FR-A- 2 786 197

## Description

La présente invention a pour objet un procédé de refroidissement du col de bouteilles, utilisé dans le domaine de l'élaboration des vins selon la méthode dite champenoise, pour préparer les bouteilles à l'opération dite de dégorgement, ainsi qu'une machine permettant de mettre en oeuvre ce procédé.

La méthode champenoise consiste essentiellement à provoquer, après une première fermentation dite "alcoolique" en cuve, et éventuellement une deuxième fermentation dite "malolactique", en bouteille, une seconde, ou troisième, fermentation en ajoutant au vin des ferments qui vont lentement transformer le sucre en alcool et en gaz carbonique. Après une période de vieillissement, la fermentation produit un dépôt qui doit être évacué, ce qui est réalisé lors de l'opération dite de dégorgement. Afin de laisser échapper le moins de vin possible lors de cette opération de dégorgement qui est réalisée bouteille à l'endroit, et d'éviter que le dépôt ne redescende dans la bouteille, on en refroidit le col en l'immergeant dans un bain de liquide frigorigène jusqu'à la formation d'un glaçon renfermant les particules du dépôt, il suffit ensuite d'évacuer le glaçon qui renferme le dépôt, le vin évacué sous forme de glace étant ensuite remplacé.

Il existe à ce jour essentiellement un seul procédé pour réaliser mécaniquement la formation du glaçon dans une bouteille, et qui consiste à plonger le col des bouteilles dans un bain de saumure ou de glycol, comme cela est décrit dans les documents FR 2.578.037 et FR 2.854.450 par exemple. Ce procédé présente des inconvénients en ce sens que la manipulation du glycol est peu agréable, et que ce produit est peu compatible avec un environnement alimentaire.

Pour pallier ces inconvénients il a été proposé dans le document FR 2.538.885 d'utiliser un autre liquide frigorigène plus froid, à savoir de l'azote liquide, en sorte notamment d'accélérer l'étape de refroidissement. L'utilisation de l'azote liquide présente toutefois un inconvénient majeur, celui de faire éclater les bouteilles de verres lorsqu'il vient au contact de celles-ci. Ainsi, la machine décrite dans ce document n'a jamais pu être utilisée.

Pour pallier cet inconvénient les présents demandeurs ont proposés, dans les demandes EP 1 798 281 et WO2006103365, de recourir à un dispositif de bouchage spécial et à une machine particulière utilisant de l'azote liquide, et permettant de ne faire tremper dans l'azote liquide que ledit dispositif de bouchage, empêchant ainsi que l'azote liquide n'entre en contact avec le verre.

Cependant, ce procédé présente l'inconvénient, outre des problèmes de cadence et de réglages, de nécessiter un système de bouchage particulier, alors que les bouteilles en stocks actuellement et qui sont à dégorger les prochaines années, sont bouchées de manière traditionnelle.

La présente invention a pour but de remédier à cet inconvénient en proposant un procédé de refroidissement du col de bouteilles susceptible de permettre l'utilisation de l'azote liquide, ou un autre liquide cryogénique, et qui ne nécessite pas un bouchage particulier, ainsi que la machine permettant de mettre en oeuvre ce procédé.

Le procédé de refroidissement du col de bouteilles, utilisé dans le domaine de l'élaboration des vins selon la méthode dite champenoise, pour préparer les bouteilles à l'opération dite de dégorgement selon l'invention, se caractérise essentiellement en ce qu'il consiste à positionner les bouteilles à traiter tête en bas, à faire émerger les cols de ces bouteilles dans un espace clos, et à faire parcourir cet espace clos par un flux d'air qui aura été préalablement refroidi.

Selon une caractéristique additionnelle du procédé selon l'invention, on fait se déplacer les bouteilles dans un sens inverse de celui du flux d'air refroidi.

L'abaissement de la température est plus progressif que lors d'un trempage dans l'azote, et il n'y a donc aucun risque d'éclatement du verre car la contraction du verre est progressive.

De manière préférentielle, pour des raisons de gain de temps, le refroidissement du flux d'air est obtenu en utilisant de l'azote liquide, ou un autre liquide cryogénique, soit par injection directe de l'azote liquide, ou un autre liquide cryogénique, dans le flux d'air, soit indirectement au travers d'un échangeur disposé sur le trajet dudit flux.

Dans le cas d'une injection directe dans le flux d'air, elle est faite en amont du flux en sorte qu'il ne subsiste pas d'azote, ou un autre liquide cryogénique, sous forme liquide dans le flux. Ainsi les bouteilles sont dans un premier temps exposées à un flux d'air moins froid, ce qui augmente la progressivité du refroidissement.

L'injection indirecte est utilisée pour répondre à certaines exigences du point de vue sécurité, sachant que la manipulation de l'azote liquide, ou un autre liquide cryogénique, nécessite certaines précautions.

On notera que dans la pratique on utilise souvent des machines de refroidissement mobiles, destinées à être déplacées d'un chai à un autre pour réaliser sur place les opérations de dégorgement. Aussi, de telles machines mobiles peuvent mettre en oeuvre le procédé selon l'invention, mais pour des raisons de sécurité le refroidissement de l'air par injection d'azote liquide, ou autre liquide cryogénique, est remplacé un refroidissement au moyen d'un échangeur frigorifique de type courant, la différence de température étant compensée par une exposition plus longue au flux d'air refroidit.

La machine de mise en oeuvre du procédé refroidissement du col de bouteilles se caractérise essentiellement en ce qu'elle comprend, dans une enceinte fermée, un tunnel délimité supérieurement par un chemin de transfert, ou une table de réception de bouteilles, muni d'alvéoles recevant des bouteilles tête en bas et ne laissant dépasser inférieurement, dans ledit tunnel, que les cols desdites bouteilles, ledit tunnel étant associé d'une part à des moyens de ventilation qui créent dans ledit tunnel un flux d'air, et d'autre part des moyens de refroidissement dudit flux d'air.

Selon une caractéristique additionnelle de la machine selon l'invention, le tunnel est connecté, au travers de chacune de ses extrémités, à un tunnel secondaire en sorte d'organiser une circulation en boucle du flux d'air.

Selon un premier mode de réalisation de la machine selon l'invention, les moyens de refroidissement consistent en au moins un échangeur frigorifique.

Selon un autre deuxième mode de réalisation de la machine selon l'invention les moyens de refroidissement comprennent des moyens de pulvérisation d'azote liquide, ou autre liquide cryogénique, dans le flux d'air créé par les moyens de ventilation.

De manière préférentielle, le tunnel secondaire est parallèle au tunnel principal, et est disposé sous ce dernier. Dans le cas d'un refroidissement par pulvérisation d'azote liquide, ou autre liquide cryogénique, celle-ci est réalisée dans le tunnel secondaire afin d'éviter qu'il ne se retrouve sous forme liquide dans le tunnel principal.

Selon une autre caractéristique additionnelle de la machine selon l'invention, elle comporte une enceinte fermée munie de moyens d'échange thermique, disposée sur le trajet du flux d'air, dans ledit tunnel secondaire, et comportant des moyens d'injection et de pulvérisation d'azote liquide, ou autre liquide cryogénique, aptes à pulvériser de l'azote liquide, ou autre liquide cryogénique, dans ladite enceinte.

Selon une caractéristique additionnelle de la machine selon l'invention, le tunnel principal et le tunnel secondaire sont séparés par une cloison, laquelle est conformée en une enceinte fermée munie de moyens d'échange thermique et dans laquelle est injecté de l'azote liquide, ou autre liquide cryogénique.

Selon une variante de la machine selon l'invention, le tunnel principal et le tunnel secondaire sont séparés par une cloison, laquelle est conformée en une enceinte fermée munie de moyens d'échange thermique, et est associée à un échangeur frigorifique.

Selon une autre caractéristique additionnelle de la machine selon l'invention, le chemin de transfert est constitué d'une succession de plaques disposées transversalement au sens de déplacement, et comportant chacune plusieurs alvéoles permettant le chargement de plusieurs bouteilles.

Les dimensions des plaques et le nombre d'alvéoles par plaque est choisi en fonction du mode de stockage des bouteilles, en sorte de permettre une automatisation du chargement et du déchargement de la machine.

Les avantages et les caractéristiques de la machine de refroidissement du col de bouteilles selon l'invention, ressortiront plus clairement de la description qui suit et qui se rapporte au dessin annexé, lequel en représente plusieurs modes de réalisation non limitatifs.
- la figure 1 représente une vue schématique partielle en coupe selon un plan vertical longitudinal d'une machine de refroidissement du col de bouteilles selon l'invention.
- la figure 2 représente une vue schématique partielle en plan de la même machine.
- la figure 3 représente une vue schématique partielle en coupe selon un plan vertical longitudinal d'une variante de la même machine de refroidissement.
- la figure 4 représente une vue schématique partielle en coupe selon un plan vertical longitudinal d'une autre variante de la même machine de refroidissement.
- la figure 5 représente une vue schématique partielle en coupe selon un plan vertical longitudinal d'une autre variante de machine de refroidissement du col de bouteilles selon l'invention.
- la figure 6 représente une vue schématique en coupe selon un plan vertical transversal de la machine de la figure 5.

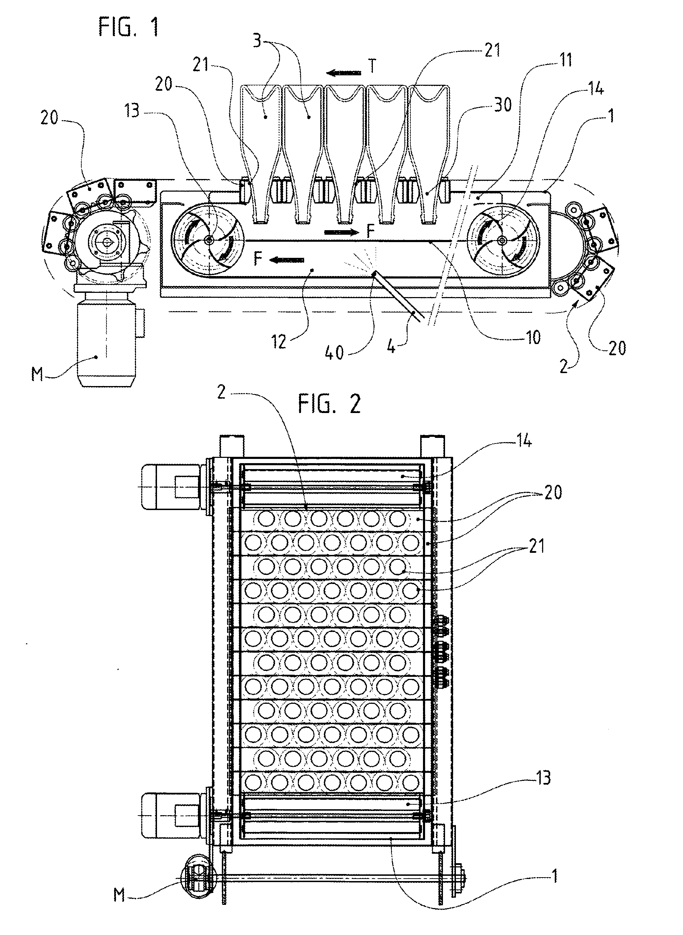

En référence aux figures 1 et 2, on peut voir qu'une machine de refroidissement de cols de bouteilles selon l'invention, comprend une enceinte 1 divisée longitudinalement par une paroi horizontale 10, en un tunnel supérieur 11 et un tunnel inférieur 12, comportant deux turbines transversales 13 et 14, agencées pour créer un flux d'air continu circulant en boucle dans les tunnels 11 et 12, dans le sens F.

Le tunnel supérieur 11 est fermé supérieurement par un chemin de transfert 2, constitué d'une juxtaposition dans le sens longitudinal de plaques transversales 20, percées d'alvéoles 21 permettant chacune l'introduction et le maintien d'une bouteille 3 tête en bas, et dimensionnée en sorte que seul le col 30 émerge inférieurement sous la plaque 20, dans le tunnel supérieur 11.

Sous l'action d'une motorisation M, les plaques 20 du chemin de transfert 2 sont mobiles longitudinalement dans le sens T, lequel est inverse de celui F du flux d'air dans le tunnel supérieur 11.

D'autre part, la machine de refroidissement représentée comporte des moyens d'injection 4 d'azote liquide comprenant des moyens 40 de pulvérisation d'azote liquide dans le tunnel inférieur 12.

On notera que plusieurs liquides cryogéniques peuvent être utilisés comme moyens de refroidissement, mais que parmi ceux-ci l'azote liquide est le plus courant, aussi, dans un but de simplification, il ne sera fait référence dans la description à venir que d'azote liquide.

On comprendra que l'air du flux F est refroidi lorsqu'il traverse le tunnel inférieur 12, dans lequel les moyens d'injection créent un brouillard d'azote liquide, et que ce flux F d'air va refroidir les cols 30 des bouteilles 3 qui se déplacent dans le tunnel supérieur 11.

Du point de vue pratique, avec un flux d'air F circulant à environ 40 KM/h et qui est à une température de -130° C, on obtient une congélation d'un col en 3 ou 4 minutes.

On notera également que les caractéristiques de la machine représentée correspondent à celle d'une machine apte à fonctionner à une cadence élevée, éventuellement de manière automatique, les bouteilles étant chargées d'un côté et traitées de l'autre après refroidissement. Il est toutefois possible de concevoir des machines plus simples, notamment en ce que le chemin de transfert 2 est remplacé par une table fixe, percée d'alvéoles pour réceptionner les bouteilles, lesquelles peuvent y être déposées et reprises manuellement.

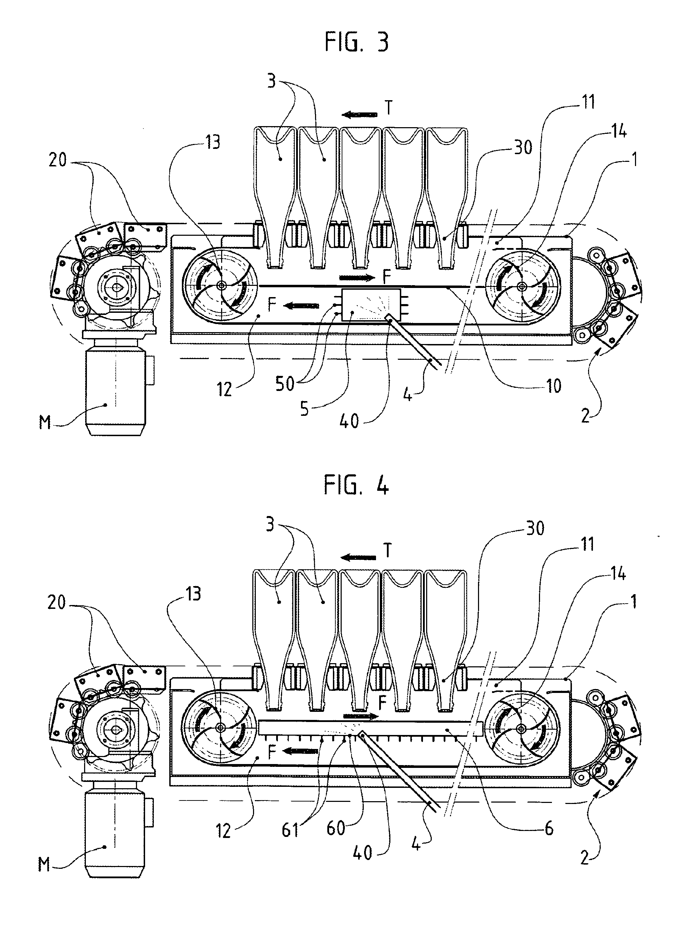

En référence maintenant à la figure 3, on peut voir une variante de la machine salon l'invention, dont la différence consiste ce qu'elle comporte une enceinte 5 disposée dans le tunnel inférieur 12, dans laquelle débouchent les moyens 40 de pulvérisation des moyens 4 d'injection d'azote liquide, et qui constitue des moyens de refroidissement du flux d'air.

Cette enceinte 5 est munie d'échangeurs thermiques 50, tels que des ailettes, permettant de refroidir le flux d'air F qui traverse le tunnel inférieur 12.

Cette variante présente des avantages par rapport au mode de réalisation décrit précédemment.

Du point de vue sécurité, il n'y a pas de risque de fuite d'azote liquide hors de l'enceinte 1, de plus l'absence de fuite permet d'une part un réglage plus précis de la température du flux d'air F, et d'autre part une économie en azote.

La figure 4 représente une autre forme de construction de la variante de la machine décrite précédemment, où la paroi 10 qui sépare les tunnels supérieur 11 et inférieur 12, est remplacée par une enceinte fermée 6 dans laquelle débouchent les moyens 40 de pulvérisation des moyens 4 d'injection d'azote liquide, en sorte de constituer le moyen de refroidissement du flux d'air.

La paroi inférieure 60 de l'enceinte fermée 6, qui constitue une paroi du tunnel inférieur 12, est munie d'échangeurs thermiques 61, tels que des ailettes, au contact desquels l'air est refroidi.

Ce mode de construction présente les mêmes avantages de sécurité, de précision de réglage de la température et d'économie que celui décrit précédemment.

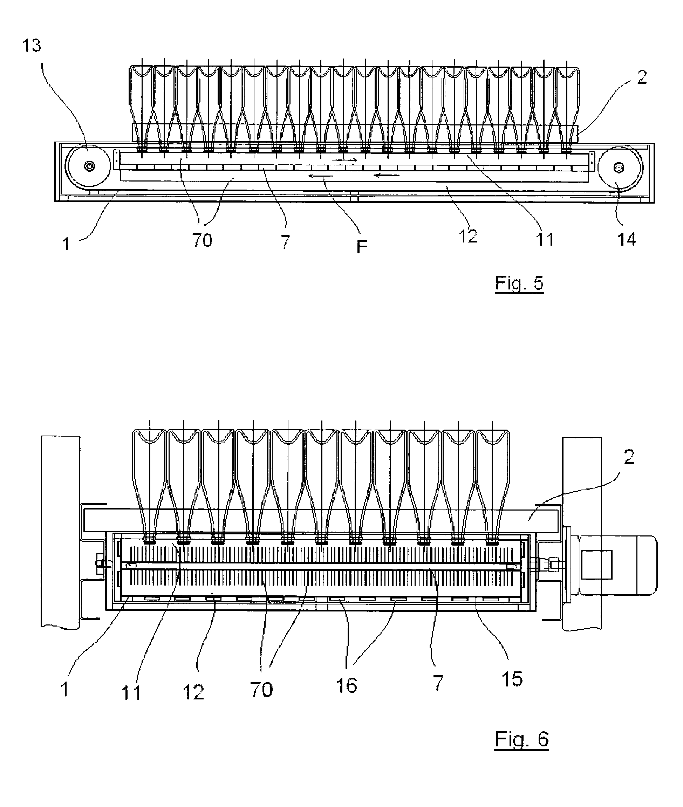

En référence maintenant aux figures 5 et 6, on peut voir une autre variante de la machine de refroidissement selon l'invention, qui peut notamment, mais non exclusivement, être utilisée comme version mobile d'une machine de refroidissement, destinée à être déplacées d'un chai à un autre pour réaliser sur place les opérations de dégorgement.

Sur une telle machine le refroidissement du flux d'air F peut être obtenu au travers de l'azote liquide, mais il est es de préférence obtenu au travers d'un échangeur frigorifique. Comme un tel générateur ne permet d'atteindre qu'une température de l'ordre de -70° C, la différence est compensée par une durée d'exposition au flux d'air allongée en conséquence.

Sur cette machine on retrouve les deux tunnels supérieur 11 et inférieur 12, et les deux turbines transversales 13 et 14. Les deux tunnels sont séparés par une cloison horizontale qui consiste en un radiateur 7 muni d'ailettes 70 qui s'étendent dans les tunnels 11 et 12, verticalement et parallèlement au sens du flux d'air F, et connecté à un échangeur frigorifique, non représenté.

De manière avantageuse, comme cela est visible sur la figure 6, la paroi 15 de l'enceinte 1 comporte elle-même un système de réfrigération 16, de type serpentin, éventuellement connecté au même échangeur frigorifique, non représenté. Cette réfrigération annexe permet de maintenir une température quasiment constante à l'intérieur de l'enceinte 1.

L'échangeur frigorifique peut être de différents types, il peut de manière avantageuse consister en un groupe de froid à air pulsé à échangeur interne comportant une bouche de soufflage qui injecte de l'air froid en amont du chemin de transfert 2 au niveau de la turbine transversale 13, et qui en aspire en aval du chemin de transfert 2 au niveau de la turbine transversale 14. Le groupe de froid permet de créer de l'air très froid, jusqu'à -90° C, tandis que les deux turbines 13 et 14 réalisent le confinement de cet air froid et assurent la stabilité de la température.

L'association d'une part de la création de froid à une température contrôlée, quels que soient les moyens utilisés, d'autre pat de la circulation du flux d'air à une vitesse choisie et d'autre part encore du déplacement des bouteilles, permet une excellente maîtrise de la congélation des cols.

De manière avantageuse, le procédé et la machine de refroidissement selon l'invention permettent, tout en s'affranchissant de l'utilisation de glycol, d'atteindre des cadences supérieures pour un résultat supérieur.

Comme cela a été exposé, la mise en oeuvre du procédé selon l'invention peut être réalisée avec différents moyens de production de froid, lesquels doivent être choisis en fonction du résultat recherché et des contraintes d'utilisation. Ainsi, dans le cas d'une installation fixe il est préférable d'utiliser d'azote liquide ou autre liquide cryogénique, qui permet d'atteindre des cadences élevées mais nécessite des précautions d'utilisation particulières. En ce qui concerne les autres modes de production de froid, ils seront préférés, non exclusivement, pour des unités de refroidissement mobiles

De manière optionnelle, la machine de refroidissement selon l'invention peut être associée à une unité de conditionnement des bouteilles, qui consiste en une chambre disposée en amont de la machine, dans laquelle sont stockées temporairement des bouteilles avant d'alimenter le chemin de transfert 2, et dans laquelle règne une température basse, obtenue de préférence, mais non limitativement, par récupération des frigories qui échappent de la machine de refroidissement.

## Revendications

1. Procédé de refroidissement du col des bouteilles, utilisé dans le domaine de l'élaboration des vins selon la méthode dite champenoise, pour préparer les bouteilles (3) à l'opération dite de dégorgement, **caractérisé en ce qu'**il consiste à positionner les bouteilles (3) à traiter tête en bas, à faire émerger les cols (30) de ces bouteilles (3) dans un espace clos (1, 11), et à faire parcourir cet espace clos (1, 11) par un flux d'air (F), qui aura été préalablement refroidi.

2. Procédé de refroidissement selon la revendication 1, **caractérisé en ce qu'**on fait se déplacer les bouteilles (3) dans un sens inverse (T) de celui du flux (F) d'air refroidi.

3. Procédé de refroidissement selon la revendication 1 ou la revendication 2, **caractérisé en ce qu'**on refroidi le flux d'air au moyen d'azote liquide, ou autre liquide cryogénique, injecté directement dans ledit flux d'air, ou indirectement au travers d'un échangeur disposé sur le trajet dudit flux.

4. Procédé de refroidissement selon la revendication 1 ou la revendication 2, **caractérisé en ce qu'**on refroidi le flux d'air au moyen d'un échangeur frigorifique.

5. Machine de mise en oeuvre du procédé refroidissement du col des bouteilles selon l'une quelconque des revendications précédentes, **caractérisée en ce qu'**elle comprend, dans une enceinte fermée (1), un tunnel (11) délimité supérieurement par un chemin de transfert (2), ou une table de réception de bouteilles, muni d'alvéoles (21) recevant des bouteilles (3) tête en bas et ne laissant dépasser inférieurement, dans ledit tunnel (11), que les cols (30) desdites bouteilles (3), ledit tunnel (11) étant associé d'une part à des moyens de ventilation (13, 14) qui créent dans ledit tunnel (11) un flux d'air (F), et d'autre part des moyens (5; 6; 7) de refroidissement dudit flux d'air (F).

6. Machine de refroidissement selon la revendication 5, **caractérisée en ce que** le tunnel (11) est connecté, au travers de chacune de ses extrémités, à un tunnel secondaire (12) en sorte d'organiser une circulation en boucle du flux d'air (F).

7. Machine de refroidissement selon la revendication 6, **caractérisée en ce que** les moyens de refroidissement consistent en au moins un échangeur frigorifique.

8. Machine de refroidissement selon la revendication 6, **caractérisée en ce que** les moyens de refroidissement comprennent des moyens (40) de pulvérisation d'azote liquide, ou autre liquide cryogénique, dans le flux d'air (F) créé par les moyens de ventilation (13, 14).

9. Machine de refroidissement selon la revendication 6, **caractérisée en ce qu'**elle comporte une enceinte fermée (5; 6) munie de moyens d'échange thermique (50; 61), disposée sur le trajet du flux d'air (F), dans ledit tunnel secondaire (12), et comportant des moyens (4; 40) d'injection et de pulvérisation d'azote liquide, ou autre liquide cryogénique, aptes à pulvériser de l'azote liquide, ou autre liquide cryogénique, dans ladite enceinte (5; 6).

10. Machine de refroidissement selon la revendication 6, **caractérisée en ce que** le tunnel principal (11) et le tunnel secondaire (12) sont séparés par une cloison (6), laquelle est conformée en une enceinte fermée munie de moyens d'échange thermique (61) et dans laquelle est injecté de l'azote liquide, ou autre liquide cryogénique.

11. Machine de refroidissement selon la revendication 7, **caractérisée en ce que** le tunnel principal (11) et le tunnel secondaire (12) sont séparés par une cloison (7), laquelle est conformée en une enceinte fermée munie de moyens d'échange thermique (70), et est associée à un échangeur frigorifique.

12. Machine de refroidissement selon la revendication 11, **caractérisée en ce que** la cloison (7) conformée en une enceinte fermée consiste en un radiateur muni d'ailettes (70) qui s'étendent dans les tunnels (11 et 12, verticalement et parallèlement au sens du flux d'air F

13. Machine de refroidissement selon l'une quelconque des revendications 5 à 12, **caractérisée en ce que** le chemin de transfert (2) est constitué d'une succession de plaques (20) disposées transversalement au sens de déplacement (T), et comportant chacune plusieurs alvéoles (21) permettant le chargement de plusieurs bouteilles (3).

## Claims

1. Method for cooling the neck of bottles, used in the field of winemaking according to the so-called Champagne method, for preparing the bottles (3) for the so-called disgorging operation, wherein the method consists in positioning the bottles (3) to be treated upside down, in having the necks (30) of these bottles (3) emerge into a closed space (1, 11), and in having an air flow (F), which will previously have been cooled, circulate in this closed space (1, 11).

2. Method for cooling according to claim 1, wherein the bottles (3) are caused to move in an opposite direction (T) with respect to that of the cooled air flow (F).

3. Method for cooling according to claim 1 or claim 2, wherein the air flow is cooled with liquid nitrogen, or another cryogenic liquid, injected directly into said air flow, or indirectly through an exchanger arranged on the path of said flow.

4. Method for cooling according to claim 1 or claim 2, wherein the air flow is cooled by means of a cold exchanger.

5. Machine for implementing the method for cooling the neck of bottles according to any of the preceding claims, wherein the machine comprises, in a closed chamber (1), a tunnel (11) delimited at the top by a transfer path (2), or a table for receiving bottles, provided with recesses (21) receiving bottles (3) upside down and letting protrude from the bottom, into said tunnel (11), only the necks (30) of said bottles (3), said tunnel (11) being associated, on the one hand, with ventilation means (13, 14) that create in said tunnel (11) an air flow (F) and, on the other hand, means (5; 6; 7) for cooling said air flow (F).

6. Cooling machine according to claim 5, wherein the tunnel (11) is connected, through each of its ends, to a secondary tunnel (12) so as to organize a closed-loop air flow (F).

7. Cooling machine according to claim 6, wherein the cooling means consist of at least one cold exchanger.

8. Cooling machine according to claim 6, wherein the cooling means comprise means (40) for pulverizing liquid nitrogen, or another cryogenic liquid, into the air flow (F) created by the ventilation means (13, 14).

9. Cooling machine according to claim 6, wherein the machine includes a closed chamber (5; 6) provided with heat-exchange means (50; 61), arranged on the path of the air flow (F), in said secondary tunnel (12), and including means (4; 40) for injecting and pulverizing liquid nitrogen, or another cryogenic liquid, capable of pulverizing liquid nitrogen, or another cryogenic liquid, into said chamber (5; 6).

10. Cooling machine according to claim 6, wherein the main tunnel (11) and the secondary tunnel (12) are separated by a partition (6), which is shaped in the form of a closed chamber provided with heat-exchange means (61) and into which the liquid nitrogen, or another cryogenic liquid, is injected.

11. Cooling machine according to claim 7, wherein the main tunnel (11) and the secondary tunnel (12) are separated by a partition (7), which is shaped in the form of a closed chamber provided with heat-exchange means (70), and is associated to a cold exchanger.

12. Cooling machine according to claim 11, wherein the partition (7) shaped in the form of a closed chamber consists of a radiator provided with fins (70) that extend in the tunnels (11 and 12), vertically and parallel to the direction of the air flow F.

13. Cooling machine according to any of claims 5 to 12, wherein the transfer path (2) is comprised of a succession of plates (20) arranged transversally to the direction of displacement (T) and each including several recesses (21) permitting to load several bottles (3).

## Patentansprüche

1. Verfahren zum Abkühlen von Flaschenhälsen, verwendet im Bereich der Weinbereitung gemäß dem sogenannten Flaschengärverfahren, zum Aufbereiten der Flaschen (3) für den sogenannten Enthefungsvorgang, **dadurch gekennzeichnet, dass** der Verfahren darin besteht, die zu behandelnden Flaschen (3) über Kopf zu positionieren, die Hälse (30) dieser Flaschen (3) in einen geschlossenen Raum (1, 11) hineinragen zu lassen, und einen Luftfluss (F), der vorab gekühlt worden ist, in diesem geschlossenen Raum (1, 11) umlaufen zu lassen.

2. Verfahren zum Abkühlen nach Anspruch 1, **dadurch gekennzeichnet, dass** man die Flaschen (3) in einer umgekehrten Richtung (T) bezüglich derjenigen des gekühlten Luftflußes (F) verschieben lässt.

3. Verfahren zum Abkühlen nach Anspruch 1 oder Anspruch 2, **dadurch gekennzeichnet, dass** der Luftfluss mit flüssigem Nitrogen, oder einer anderen Kryoflüssigkeit, gekühlt wird, der direkt in den besagten Luftfluss, oder indirekt über einen auf dem Weg des besagten Flusses angeordneten Austäuscher injiziert wird.

4. Verfahren zum Abkühlen nach Anspruch 1 oder Anspruch 2, **dadurch gekennzeichnet, dass** der Luftfluss mittels eines Kälteaustäuschers gekühlt wird.

5. Maschine zur Anwendung des Verfahrens zum Abkühlen von Flaschenhälsen nach irgendeinem der vorgehenden Ansprüche, **dadurch gekennzeichnet, dass** die Maschine in einer geschlossenen Kammer (1) einen Tunnel (11) umfasst, der oben von einer Transferbahn (2) oder einem Tisch zur Aufnahme von Flaschen begrenzt ist, die/der mit Aussparungen (21) versehen ist, die Flaschen (3) über Kopf aufnehmen und nur die Hälse (30) der besagten Flaschen (3) aus dem Boden in den besagten Tunnel (11) hineinragen lassen, wobei der besagte Tunnel (11) einerseits Lüftungsmitteln (13, 14), die in dem besagten Tunnel (11) einen Luftfluss (F) erzeugen, und andererseits Mitteln (5; 6; 7) zum Kühlen des besagten Luftflusses (F) zugeordnet ist.

6. Maschine zum Abkühlen nach Anspruch 5, **dadurch gekennzeichnet, dass** der Tunnel (11) über jedes seiner Enden mit einen Sekundärtunnel (12) verbunden wird, sodass ein Luftfluss in geschlossenem Kreis (F) organisiert wird.

7. Maschine zum Abkühlen nach Anspruch 6, **dadurch gekennzeichnet, dass** die Kühlmittel aus wenigstens einem Kälteaustäuscher bestehen.

8. Maschine zum Abkühlen nach Anspruch 6, **dadurch gekennzeichnet, dass** die Abkühlmittel Mittel (40) zum Sprühen von flüssigem Nitrogen, oder einer anderen Kryoflüssigkeit, in den von den Lüftungsmitteln (13, 14) erzeugten Luftfluss (F) umfassen.

9. Maschine zum Abkühlen nach Anspruch 6, **dadurch gekennzeichnet, dass** die Maschine eine mit Wärmeaustäuschmitteln (50; 61) versehene geschlossene Kammer (5; 6), die auf dem Weg des Luftflusses (F) in dem besagtem Sekundärtunnel (12) angeordnet ist, und Mittel (4; 40) zum Injizieren und Sprühen von flüssigem Nitrogen, oder einer anderen Kryoflüssigkeit, umfasst, die geeignet sind, um flüssiges Nitrogen, oder eine andere Kryoflüssigkeit, in die besagte Kammer (5; 6) zu sprühen.

10. Maschine zum Abkühlen nach Anspruch 6, **dadurch gekennzeichnet, dass** der Haupttunnel (11) und der Sekundärtunnel (12) durch eine Trennwand (6) getrennt sind, die als eine mit Wärmeaustäuschmitteln (61) versehene geschlossene Kammer geformt ist, in die das flüssige Nitrogen, oder eine andere Kryoflüssigkeit, injiziert wird.

11. Maschine zum Abkühlen nach Anspruch 7, **dadurch gekennzeichnet, dass** der Haupttunnel (11) und der Sekundärtunnel (12) durch eine Trennwand (7) getrennt sind, die als eine mit Wärmeaustäuschmitteln (70) versehene geschlossene Kammer geformt und einem Kälteaustäuscher zugeordnet ist.

12. Maschine zum Abkühlen nach Anspruch 11, **dadurch gekennzeichnet, dass** die als eine geformte, geschlossene Kammer Trennwand (7) aus einem Radiator besteht, der mit Flügeln (70) versehen ist, die sich senkrecht und parallel zur Richtung des Luftflusses F in die Tunnels (11 und 12) hinein erstrecken.

13. Maschine zum Abkühlen nach irgendeinem der Ansprüche 5 bis 12, **dadurch gekennzeichnet, dass** die Transferbahn (2) aus einer Folge von quer zur Verschiebungsrichtung (T) angeordneten Platten (20) besteht, die jeweils mehrere Aussparungen (21) umfassen, die es erlauben, mehrere Flaschen (3) zu laden.
